# EUROPEAN PATENT APPLICATION

(11) **EP 4 624 933 A1**
(43) Date of publication of application: **01.10.2025**
(21) Application number: 23894212.2
(22) Date of filing: 28.08.2023
(51) Int. Cl.: G01N 35/02

(54) **SPECIMEN CONTAINER IMAGING DEVICE AND SPECIMEN PROCESSING APPARATUS**

(30) Priority: 25.11.2022 JP 2022188074
(71) Applicant: HITACHI HIGH-TECH CORPORATION, Tokyo 105-6409 (JP); Roche Diagnostics GmbH, 68305 Mannheim (DE); F. Hoffmann-La Roche AG, 4070 Basel (CH)
(72) Inventor: OCHI Manabu, Tokyo 100-8280 (JP); TAMEZANE Hideto, Tokyo 105-6409 (JP); TAKAYAMA Hiroyuki, Tokyo 105-6409 (JP); MUKAIYAMA Naoki, Tokyo 105-6409 (JP); YOSHIKAWA Keiko, Tokyo 105-6409 (JP); MCCAUGHEY Andrew, 68305 Mannheim (DE)
(74) Representative: Mewburn Ellis LLP
(86) International application number: PCT/JP2023/030954
(87) International publication number: WO 2024/111196

(57) **Abstract**

Provided are a sample tube imaging device and a sample processing unit capable of imaging a sample tube and a sample in the sample tube while ensuring illuminance in a portion far from a light source of the sample tube. A sample tube imaging device includes a rack conveyor that transfers a sample rack storing a sample tube in which a sample is put, a camera that is provided on a side of the rack conveyor and captures an image of the sample tube on the rack conveyor, a light source that is provided on a side of the rack conveyor on the same side as the camera and illuminates the sample tube captured by the camera from above, and a reflective surface that is located on a side opposite to the sample tube imaged by the camera with respect to an optical axis of the light source and outside a space surrounded by an optical path joining points on an outer shape of a cylindrical portion of the sample tube imaged by the camera and a principal point of the camera. The reflective surface folds back light emitted from the light source in a direction away from the sample tube and injects the light to a lower portion of the sample tube from an obliquely upward direction.

## Description

### Technical Field

The present invention relates to a sample tube imaging device and a sample processing unit.

### Background Art

In a sample inspection in which a sample such as blood or urine is caused to react with a reagent to measure absorbance or luminescence intensity of a reaction mixture, it is desired to determine the appropriateness of a tube to be used and the quality of the sample before the inspection in order to prevent consumption of consumables or reagents due to unnecessary inspection or to improve reliability of an inspection result. As a technique for determining the appropriateness of the tube to be used and the quality of a sample before the inspection, a sample processing system that detects the shape of a sample tube, the amount of the sample, and the color of the sample based on an image of the sample tube imaged before the inspection and determines in advance whether or not the sample is to be subjected to measurement is known.

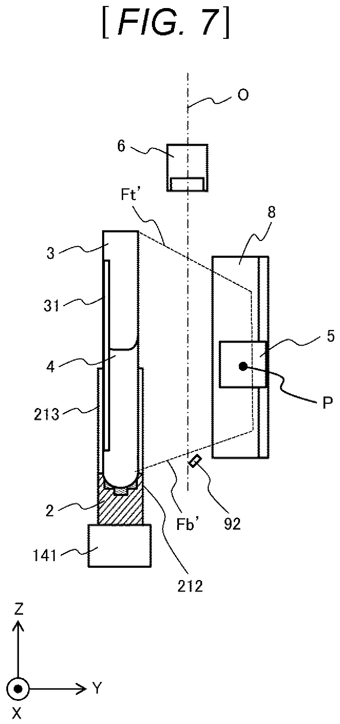

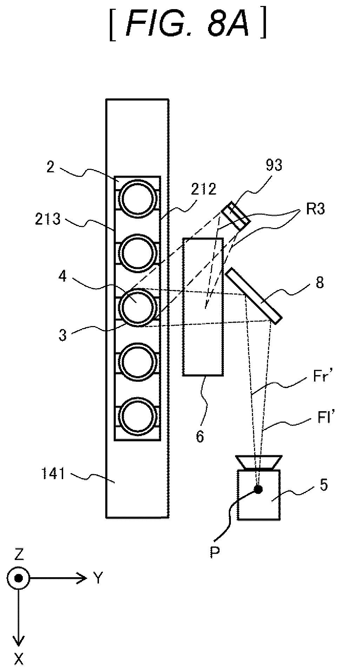

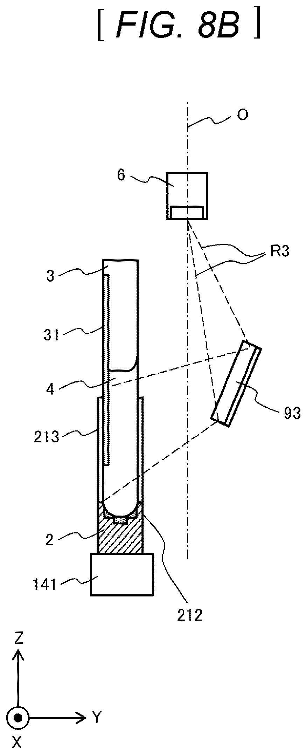

PTL 1 discloses an example of the sample processing system. PTL 1 discloses that "as illustrated in FIG. 8, the white LED 225c emits light toward the sample tube T at the first imaging position 224e, and is arranged at a position and in a direction in which the reflected light of the sample tube T is not directly injected to the camera 225a located in front of the sample tube T" in the paragraph 0036 and FIG. 7, and that "the sample tube T gripped by the gripping portion 224a at the first imaging position 224e is imaged by the camera 225a in the standing state (vertical state), and the captured image data obtained by the imaging is transmitted to the system control device 8" in the paragraph 0035 and FIG. 8.

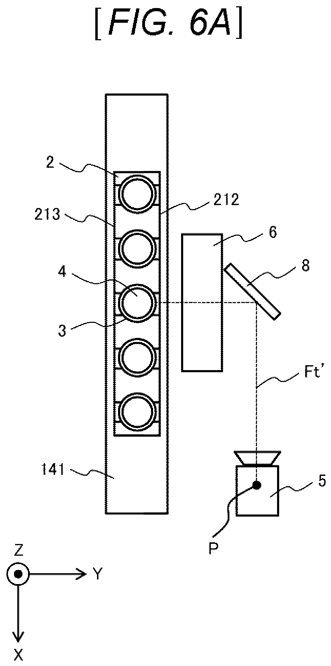

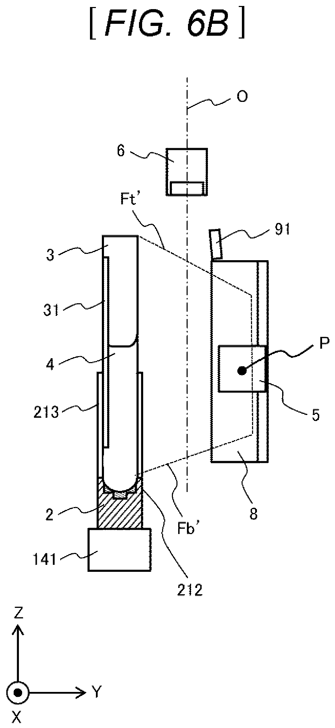

Further, PTL 2 discloses another example of the sample processing system. PTL 2 discloses that "as illustrated in FIG. 6, the white LED 225c emits light toward the sample tube T at the imaging position 224, and is arranged at a position and in a direction in which the reflected light of the sample tube T is not directly injected to the camera 225a located in front of the sample tube T" in the paragraph 0042 and FIG. 6 and that "the sample tube T held in the sample rack L at the imaging position 224 is imaged by the camera 225a, and captured image data obtained by the imaging is transmitted to the system control device 8" in the paragraph 0043.

### Citation List

### Patent Literature

PTL 1: JP 2010-107399 A
PTL 2: JP 2010-133925 A

### Summary of Invention

### Technical Problem

That is, both PTL 1 and PTL 2 disclose techniques in which the sample tube is illuminated with a white light emitting diode (referred to as a light source below) from obliquely above the front of the sample tube, and the sample tube is imaged by the camera from the front.

However, both the techniques discloses in PTL 1 and PTL 2 have a problem that the illuminance becomes insufficient and the contrast in the captured image decreases as it goes below the sample tube far from the light source, and thus it is not possible to detect the interface of the sample in a case where the amount of the sample is small or the like.

Therefore, an object of the present invention is to provide a sample tube imaging device and a sample processing unit capable of imaging a sample tube and a sample in the sample tube while ensuring illuminance in a portion far from a light source of the sample tube.

### Solution to Problem

In order to solve the above problems, according to the present invention, a sample tube imaging device includes a rack conveyor that transfers a sample rack storing a sample tube in which a sample is put, a camera that is provided on a side of the rack conveyor and captures an image of the sample tube on the rack conveyor, a light source that is provided on a side of the rack conveyor on the same side as the camera and illuminates the sample tube captured by the camera from above, and a reflective surface that is located on a side opposite to the sample tube imaged by the camera with respect to an optical axis of the light source and outside a space surrounded by an optical path joining points on an outer shape of a cylindrical portion of the sample tube imaged by the camera and a principal point of the camera. The reflective surface folds back light emitted from the light source in a direction away from the sample tube and injects the light to a lower portion of the sample tube from an obliquely upward direction.

In addition, according to the present invention, a sample processing unit includes, for example, the sample tube imaging device.

### Advantageous Effects of Invention

According to the present invention, it is possible to provide a sample tube imaging device and a sample processing unit capable of imaging a sample tube and a sample in the sample tube while ensuring illuminance in a portion far from a light source of the sample tube.

### Brief Description of Drawings

[FIG. 1] FIG. 1 is a top view illustrating an outline of a configuration of an automatic analyzer according to Embodiment 1.
[FIG. 2] FIG. 2 is a side view illustrating an outline of a configuration of a sample tube imaging device according to Embodiment 1.
[FIG. 3] FIG. 3 is a side view illustrating an outline of a configuration of a sample tube imaging device according to Embodiment 2.
[FIG. 4A] FIG. 4A is a top view illustrating an outline of a configuration of a sample tube imaging device according to Embodiment 3.
[FIG. 4B] FIG. 4B is a side view illustrating the outline of the configuration of the sample tube imaging device according to Embodiment 3.
[FIG. 5] FIG. 5 is a top view illustrating an outline of a configuration of an automatic analyzer according to Embodiment 5.
[FIG. 6A] FIG. 6A is a top view illustrating an outline of a configuration of a sample tube imaging device according to Embodiment 5.
[FIG. 6B] FIG. 6B is a side view illustrating the outline of the configuration of the sample tube imaging device according to Embodiment 5.
[FIG. 7] FIG. 7 is a side view illustrating an outline of a configuration of a sample tube imaging device according to Embodiment 6.
[FIG. 8A] FIG. 8A is a top view illustrating an outline of a configuration of a sample tube imaging device according to Embodiment 7.
[FIG. 8B] FIG. 8B is a side view illustrating the outline of the configuration of the sample tube imaging device according to Embodiment 7.
[FIG. 9A] FIG. 9A is a top view illustrating an outline of a configuration of a sample tube imaging device according to Embodiment 8.
[FIG. 9B] FIG. 9B is a side view illustrating the outline of the configuration of the sample tube imaging device according to Embodiment 8.
[FIG. 10A] FIG. 10A is a top view illustrating an outline of a configuration of a sample tube imaging device according to Embodiment 9.
[FIG. 10B] FIG. 10B is a front view illustrating the outline of the configuration of the sample tube imaging device according to Embodiment 9.

### Description of Embodiments

Hereinafter, an automatic analyzer including a sample tube imaging device according to the present invention will be described with reference to the drawings. Note that the automatic analyzer is an apparatus that automatically analyzes a sample, and is an example of a sample processing unit. The sample tube imaging device according to the present invention is not limited to an automatic analyzer, and can be applied to other sample processing units, for example, a preprocessing apparatus that performs preprocessing of a sample such as centrifugation or division. Furthermore, the sample tube imaging device can also be applied to any device that images a sample tube or a liquid in the sample tube. Note that, in the drawings referred to in the present specification, the same or corresponding components are denoted by the same reference signs, and repeated description of these components may be omitted.

### Embodiment 1

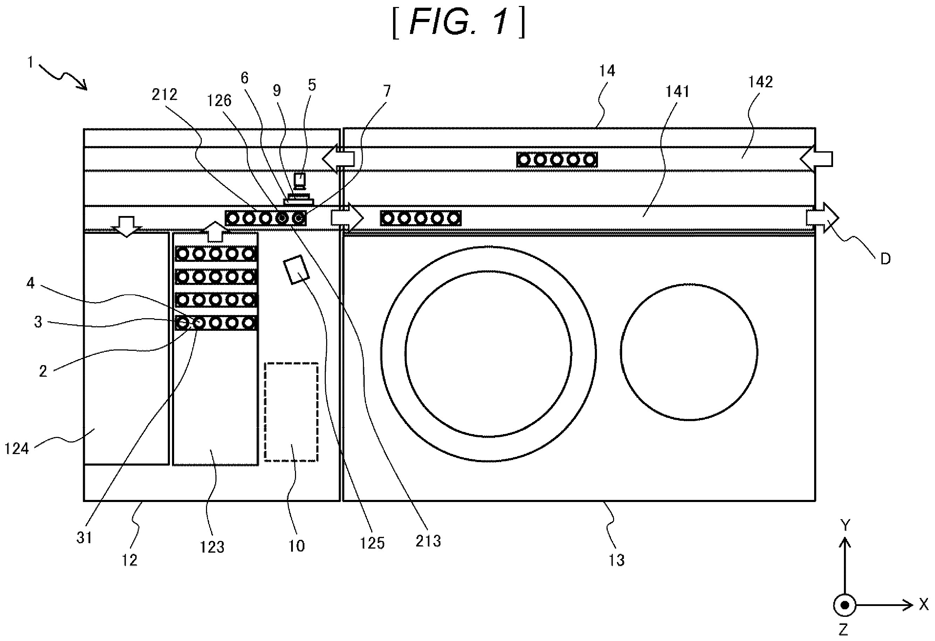

FIG. 1 is a top view illustrating an outline of a configuration of an automatic analyzer according to Embodiment 1. The automatic analyzer 1 includes a sample supply unit 12 including a carry-in port 123 and a carry-out port 124 of a sample rack 2, an analysis module 13 that performs pipetting of a predetermined amount of a sample 4 and performs measurement, a conveyance unit 14 that transfers the sample 4, and a controller 10 that controls the automatic analyzer 1. The controller 10 is installed inside the sample supply unit 12 in FIG. 1, but can be installed at any position of the automatic analyzer 1. In addition, the controller 10 may be installed outside the automatic analyzer 1 and control the automatic analyzer 1 by communicating with the automatic analyzer 1.

The sample 4 is, for example, a liquid such as blood or urine, and is put in a sample tube 3. In the automatic analyzer 1, in order to protect the sample 4 and improve workability, the sample tube 3 in which the sample 4 is put is transferred in a state of being stored in the sample rack 2.

The sample rack 2 stores the sample tube 3 in which the sample 4 is put. The sample rack 2 may be a multi-rack sample rack that can store a plurality of sample tubes 3, or may be a single-rack sample rack that stores one sample tube 3. The sample rack 2 according to the present embodiment is, for example, a five-rack sample rack. In FIG. 1, an arrow D indicates a transfer direction of the sample rack 2. In addition, the reference sign 212 represents the front surface of the sample rack 2, and the reference sign 213 represents the back surface of the sample rack 2.

The conveyance unit 14 includes a carry-in rack conveyor 141 and a carry-out rack conveyor 142. The rack conveyor 141 transfers the sample rack 2 from the sample supply unit 12 to the analysis module 13. The rack conveyor 142 transfers the sample rack 2 from the analysis module 13 to the sample supply unit 12. The rack conveyor 141 and the rack conveyor 142 can be configured by, for example, a belt or the like. Note that, in the following, an axis parallel to a transfer direction of the sample rack 2 by the rack conveyor 141 is represented as an X-axis (right-left direction), an axis parallel to a height direction of the sample tube 3 is represented as a Z-axis (up-down direction), and an axis perpendicular to both the Z-axis and the X-axis is represented as a Y-axis (front-rear direction).

The sample supply unit 12 includes a camera 5, a light source 6, and a reflective surface 9 on one side of the rack conveyor 141 (the front surface 212 side of the sample rack 2 placed on the rack conveyor 141), and a barcode reader 125 on the other side (the back surface 213 side of the sample rack 2 placed on the rack conveyor 141). That is, the camera 5, the light source 6, the reflective surface 9, and the barcode reader 125 are installed to sandwich the rack conveyor 141. Note that the rack conveyor 141, the camera 5, the light source 6, and the reflective surface 9 function as a sample tube imaging device.

The sample tube 3 stored in the sample rack 2 houses the sample 4. In addition, the sample tube 3 has a cylindrical portion and a hemispherical portion that is connected to one end of the cylindrical portion and forms a convex shape in an axial direction of the cylindrical portion.

The sample tube 3 includes a barcode label 31 for sample identification on a side surface of the cylindrical portion. In the present embodiment, it is assumed that the barcode label 31 is attached to the sample tube 3. Specifically, the barcode label 31 is attached to a portion of the sample tube 3 in the circumferential direction. The direction of the barcode label 31 of the sample tube 3 is aligned to face the back surface 213 of the sample rack 2.

On the rack conveyor 141, the back surface 213 of the sample rack 2 faces the barcode reader 125, and the front surface 212 of the sample rack 2 faces the camera 5.

The controller 10 controls the sample supply unit 12, the analysis module 13, the conveyance unit 14, the barcode reader 125, the camera 5, and the light source 6. First, the controller 10 pushes out the sample racks 2 installed in the carry-in port 123 of the sample rack 2 one by one onto the rack conveyor 141 and moves the sample racks 2 to the rack conveyor 141. The controller 10 transfers the sample rack 2 moved to the rack conveyor 141 to each of a barcode reading position 126 and a focal position 7 of the camera 5. At the barcode reading position 126, the barcode label 31 attached to the sample tube 3 is read by the barcode reader 125 from the back surface 213 side of the sample rack 2. At the focal position 7 of the camera 5, the sample tube 3 and the sample 4 inside the sample tube 3 are imaged by the camera 5 while causing the light source 6 to emit light to illuminate the sample tube 3. Then, the controller 10 identifies the sample 4 housed in the sample tube 3 based on information obtained from the barcode label 31 read by the barcode reader 125. Thereafter, the controller 10 allocates the analysis module 13 as a transfer destination to the sample rack 2 in accordance with item information registered in advance, and transfers the sample rack 2 on the rack conveyor 141.

Note that the automatic analyzer 1 can include a display device (not illustrated). Alternatively, the automatic analyzer 1 can be connected to a display device.

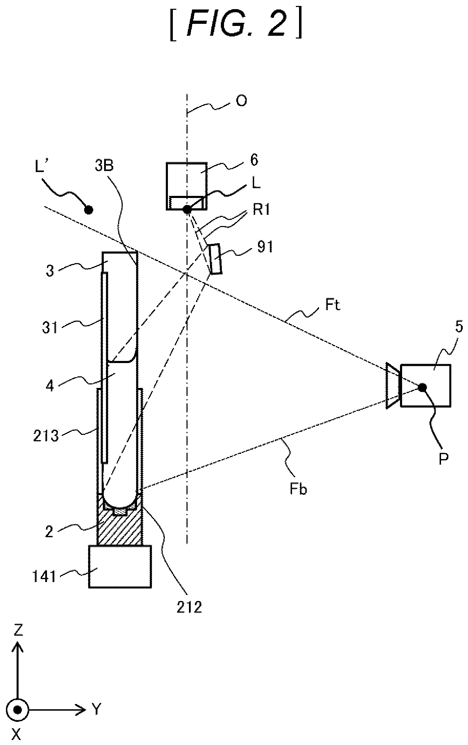

FIG. 2 is a side view illustrating an outline of a configuration of the sample tube imaging device according to Embodiment 1. Note that FIG. 2 is a side view as viewed in the X-axis positive direction. The light source 6 is provided at a position higher than the upper end of the sample tube 3 on the front surface 212 side of the sample rack 2 in the same manner as the camera 5. Specifically, the light source 6 is disposed at a position where a point L' obtained by folding back a light emission point L of the light source 6 with respect to a busbar 3B closest to the camera 5 side of the cylindrical portion of the sample tube 3 is higher than a straight line group Ft joining points on the upper end of the cylindrical portion of the sample tube 3 and a principal point P of the camera 5. Then, the light source 6 illuminates the sample tube 3 from above. As a result, an occurrence of a situation in which light that has been emitted from the light source 6 and specularly reflected on the surface of the sample tube 3 is injected to the camera 5 as direct light is prevented. Note that, in FIG. 2, in order to facilitate understanding of the straight line group Ft, a straight line joining a point closest to the principal point P of the camera 5 among points on the upper end of the cylindrical portion of the sample tube 3 and the principal point P of the camera 5 is described as the straight line group Ft. It is assumed that the same applies to the other drawings.

The reflective surface 9 illustrated in FIG. 1 is located on the side opposite to the sample tube 3 imaged by the camera 5 with respect to an optical axis O of the light source 6 and located outside a space surrounded by an optical path joining points on the outer shape of the cylindrical portion of the sample tube 3 imaged by the camera 5 and the principal point P of the camera 5. In the present embodiment, as an example of the reflective surface 9, a reflective surface 91 located above the straight line group Ft joining points on the upper end of the cylindrical portion of the sample tube 3 imaged by the camera 5 and the principal point P of the camera 5 is exemplified as illustrated in FIG. 2. Note that, as illustrated in FIG. 2, an optical path directly joining points on the outer shape of the cylindrical portion of the sample tube 3 imaged by the camera 5 and the principal point P of the camera 5 is represented by a straight line group.

By providing such a reflective surface 91, in emission light from the light source 6, light R1 emitted by the light source 6 in a direction away from the sample tube 3, that is, the light R1 emitted to the side opposite to the sample tube 3 with respect to the optical axis O is folded back by the reflective surface 91, and is injected to the lower portion of the sample tube 3 far from the light source 6 from an obliquely upward direction of the front surface of the sample tube 3 (the surface viewed from the Y-axis positive direction). That is, the lower portion of the sample tube 3 is illuminated by the light R1 emitted from the light source 6 to the side opposite to the sample tube 3 with respect to the optical axis O thereof, in addition to light directly emitted from the light source 6 in the direction of the sample tube 3. Thus, it is possible to image the sample tube 3 and the sample 4 inside the sample tube 3 while ensuring sufficient illuminance even in a portion of the sample tube 3 far from the light source 6. Note that the lower portion of the sample tube 3 refers to a portion of the sample tube 3 on a lower side.

In addition, the sample tube imaging device can image the sample tube 3 stored in the sample rack 2. Note that the present embodiment is not limited thereto, and the sample tube imaging device may image the sample tube 3 extracted from the sample rack 2.

In addition, in the present embodiment, since the lower portion of the sample tube 3 is illuminated only with light injected obliquely from above, it is possible to prevent light reflected by the surface of the lower portion of the sample tube 3 from being directly injected on the camera 5 as light. Furthermore, in the present embodiment, since the sample tube 3 is illuminated with the single light source 6, there is an advantage that it is possible to prevent the occurrence of color unevenness due to a machine difference of the color temperature of the light source, which is a problem in a case where a plurality of light sources are used.

### Embodiment 2

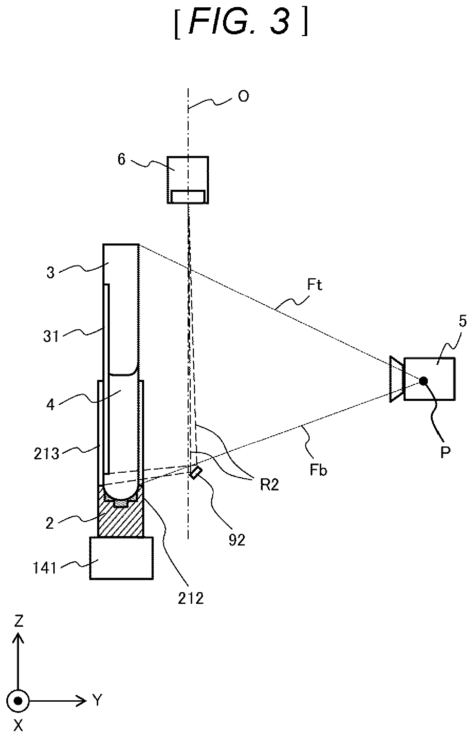

The position of the reflective surface 9 is not limited to the upper side of the straight line group Ft described in Embodiment 1. FIG. 3 is a side view illustrating an outline of a configuration of a sample tube imaging device according to Embodiment 2. Note that FIG. 3 is a side view as viewed in the X-axis positive direction. In the present embodiment, as an example of the reflective surface 9, a reflective surface 92 that is located on the side opposite to the sample tube 3 imaged by the camera 5 with respect to the optical axis O of the light source 6 and located below a straight line group Fb joining points on the lower end of the cylindrical portion of the sample tube 3 and the principal point P of the camera 5 is exemplified.

Note that, in FIG. 3, in order to facilitate understanding of the straight line group Fb, a straight line joining a point closest to the principal point P of the camera 5 among points on the lower end of the cylindrical portion of the sample tube 3 and the principal point P of the camera 5 is described as the straight line group Fb. It is assumed that the same applies to the other drawings.

In the present embodiment, light R2 emitted by the light source 6 in the direction away from the sample tube 3, that is, the light R2 emitted to the side opposite to the sample tube 3 with respect to the optical axis O is folded back by the reflective surface 92, thereby increasing the amount of light injected to the lower portion of the sample tube 3 from obliquely above the front of the sample tube 3. Thus, also in the present embodiment, it is possible to image the sample tube 3 and the sample 4 inside the sample tube 3 while ensuring sufficient illuminance in the lower portion of the sample tube 3 far from the light source 6. In addition, in the present embodiment, since the lower portion of the sample tube 3 can be illuminated by using light R2 having a small angle formed with the optical axis O of the light source 6, that is, having a strong luminous intensity, it is advantageous for improving the illuminance of the lower portion of the sample tube 3.

### Embodiment 3

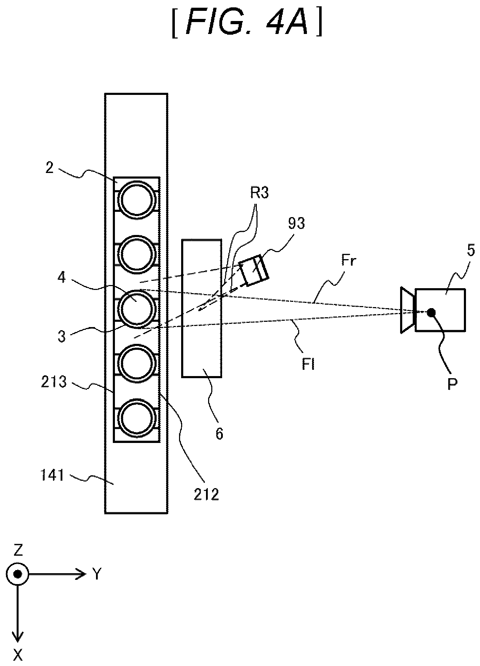

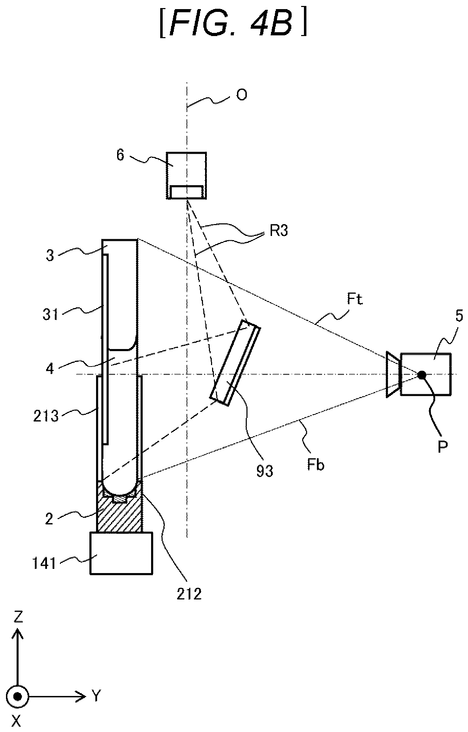

FIG. 4A is a top view illustrating an outline of a configuration of a sample tube imaging device according to Embodiment 3. FIG. 4B is a side view illustrating the outline of the configuration of the sample tube imaging device according to Embodiment 3. Note that FIG. 4B is a side view as viewed in the X-axis positive direction. In the present embodiment, as an example of the reflective surface 9, as illustrated in FIG. 4A, a reflective surface 93 that is located on the side opposite to the sample tube 3 imaged by the camera 5 with respect to the optical axis O of the light source 6 and located outside, in the right-left direction, a space surrounded by a straight line group Fl joining points on the side surface of the cylindrical portion of the sample tube 3 imaged by the camera 5 on the positive side in the X-axis direction and the principal point P of the camera 5 and a straight line group Fr joining points on the side surface of the cylindrical portion of the sample tube 3 imaged by the camera 5 on the negative side in the X-axis direction and the principal point P of the camera 5 is exemplified. Note that, in FIG. 4A, in order to facilitate understanding of the straight line groups Fl and Fr, among straight line groups joining points on the side surface of the cylindrical portion of the sample tube 3 and the principal point P of the camera 5, a straight line in contact with the sample tube 3 on the positive side in the X-axis direction is described as the straight line group Fl, and a straight line in contact with the sample tube 3 on the negative side in the X-axis direction is described as the straight line group Fr. It is assumed that the same applies to the other drawings.

Also in the present embodiment, as illustrated in FIG. 4B, light R3 emitted by the light source 6 in the direction away from the sample tube 3, that is, the light R3 emitted to the side opposite to the sample tube 3 with respect to the optical axis O is folded back by the reflective surface 93, thereby increasing the amount of light injected to the lower portion of the sample tube 3 far from the light source 6, from obliquely above. Thus, also in the present embodiment, it is possible to image the sample tube 3 and the sample 4 inside the sample tube 3 while ensuring sufficient illuminance even in the lower portion of the sample tube 3 far from the light source.

Note that the position of the reflective surface 93 in the up-down direction is set to be between the straight line group Ft and the straight line group Fb as illustrated in FIG. 4B, but is not limited thereto as long as the light R3 can be folded back and injected to the sample tube 3 from obliquely above.

In addition, by changing the position and direction of the reflective surface 93, the light R3 can be folded back to the lowermost portion of the sample tube 3 which is a portion farther from the light source 6 of the sample tube 3.

### Embodiment 4

The sample tube imaging device can include all of the reflective surface 91 of Embodiment 1, the reflective surface 92 of Embodiment 2, and the reflective surface 93 of Embodiment 3. Since none of the reflective surfaces 91, 92, and 93 blocks the light R1, R2, and R3 and does not hinder reflection on each of the reflective surfaces 91, 92, and 93, the reflective surfaces 91, 92, and 93 can be used in combination. In this case, since the lights R1, R2, and R3 can be folded back and injected to the lower portion of the sample tube 3, it is possible to image the sample tube 3 and the sample 4 inside the sample tube 3 while further improving illuminance of a portion of the sample tube 3 far from the light source 6. In addition, the present invention is not limited to the case where all of the reflective surfaces 91, 92, and 93 are provided, and any two of the reflective surfaces 91, 92, and 93 may be provided. In addition, the sample tube imaging device can further include a reflective surface as long as reflection on each of the reflective surfaces 91, 92, and 93 is not hindered.

### Embodiment 5

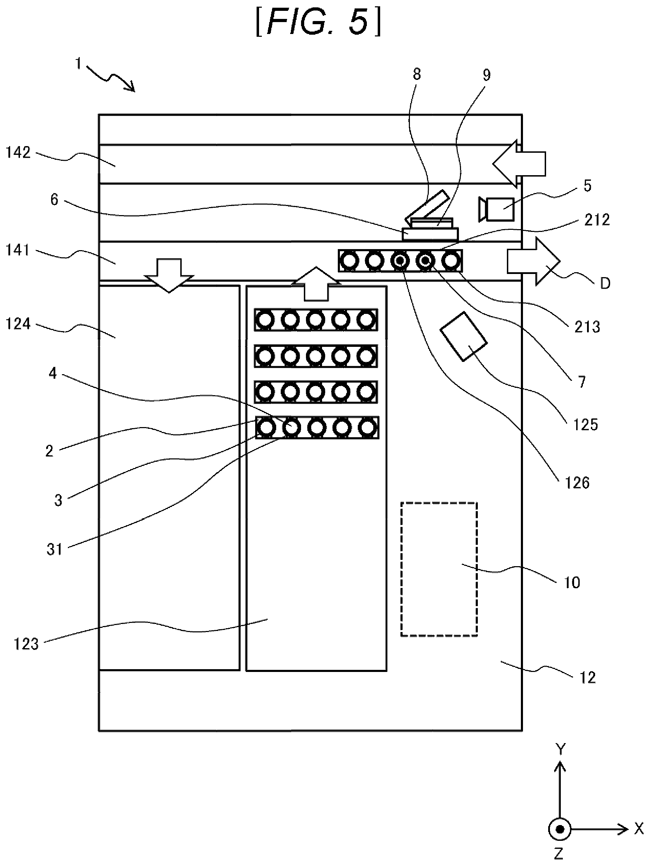

FIG. 5 is a top view illustrating an outline of a configuration of an automatic analyzer according to Embodiment 5. Note that, in FIG. 5, an analysis module 13 similar to that of Embodiments 1 to 4 is not illustrated. The same applies to the following Embodiments. Differences of a sample tube imaging device according to the present embodiment from Embodiments 1 to 4 will be mainly described below.

The sample tube imaging device according to the present embodiment includes a flat mirror 8 that is provided on the side of the rack conveyor 141 on the same side as the camera 5 and reflects the sample tube 3 on the rack conveyor 141. The camera 5 images the sample tube 3 reflected on the flat mirror 8. In the present embodiment, as illustrated in FIG. 5, an example in which the camera 5 faces the X-axis negative direction will be described. As a result, it is possible to shorten a distance between the sample tube 3 and the camera 5 in the Y-axis direction, and to shorten a distance between the rack conveyor 141 and the rack conveyor 142, and thus it is possible to reduce the size of the conveyance unit 14. However, the direction and position of the camera 5 are not limited thereto.

FIG. 6A is a top view illustrating an outline of a configuration of the sample tube imaging device according to Embodiment 5. FIG. 6B is a side view illustrating the outline of the configuration of the sample tube imaging device according to Embodiment 5. Note that FIG. 6B is a side view as viewed in the X-axis positive direction. In addition, in FIG. 6A, the reflective surface 91 is not illustrated in order to describe the positional relationship among the sample tube 3, the camera 5, and the flat mirror 8. In such a configuration, the optical path joining points on the outer shape of the cylindrical portion of the sample tube 3 imaged by the camera 5 and the principal point P of the camera 5 via the flat mirror 8 is represented by a polygonal line group bent by the flat mirror 8. Among such polygonal line groups, a polygonal line group joining points on the upper end of the cylindrical portion of the sample tube 3 and the principal point P of the camera 5 via the flat mirror 8 is defined as Ft', and a polygonal line group joining points on the lower end of the cylindrical portion of the sample tube 3 and the principal point P of the camera 5 via the flat mirror 8 is defined as Fb'. In FIGS. 6A and 6B, in order to facilitate understanding of the polygonal line group Ft', a polygonal line joining a point on the closest Y-axis positive direction side among points on the upper end of the cylindrical portion of the sample tube 3 and the principal point P of the camera is described as the polygonal line group Ft'. Similarly, in FIG. 6B, in order to facilitate understanding of the polygonal line group Fb', a polygonal line joining points on the closest Y-axis positive direction side among points on the lower end of the cylindrical portion of the sample tube 3 and the principal point P of the camera is described as the polygonal line group Fb'. It is assumed that the same applies to the other drawings.

In the present embodiment, as an example of the reflective surface 9, as illustrated in FIGS. 6A and 6B, a reflective surface 91 that is located on the side opposite to the sample tube 3 imaged by the camera 5 with respect to the optical axis O of the light source 6 and located above the polygonal line group Ft' is exemplified. The reflective surface 91 of the present embodiment is the same as the reflective surface 91 of the first embodiment except that the reflective surface 91 in the present embodiment is located above the polygonal line group Ft' illustrated in FIG. 6 instead of the straight line group Ft illustrated in FIG. 2. Therefore, the effect is similar to that of Embodiment 1.

### Embodiment 6

FIG. 7 is a side view illustrating an outline of a configuration of a sample tube imaging device according to Embodiment 6. Note that FIG. 7 is a side view as viewed in the X-axis positive direction. The sample tube imaging device according to the present embodiment includes a flat mirror 8 as in Embodiment 5.

In the present embodiment, as an example of the reflective surface 9, as illustrated in FIG. 7, a reflective surface 92 that is located on the side opposite to the sample tube 3 imaged by the camera 5 with respect to the optical axis O of the light source 6 and located below the polygonal line group Fb' is exemplified. The reflective surface 92 of the present embodiment is the same as the reflective surface 92 of Embodiment 2 except that the reflective surface 91 in the present embodiment is located below the polygonal line group Fb' illustrated in FIG. 7 instead of the straight line group Fb illustrated in FIG. 3. Therefore, the effect is similar to that of Embodiment 2.

### Embodiment 7

FIG. 8A is a top view illustrating an outline of a configuration of a sample tube imaging device according to Embodiment 7. FIG. 8B is a side view illustrating the outline of the configuration of the sample tube imaging device according to Embodiment 7. Note that FIG. 8B is a side view as viewed in the X-axis positive direction. The sample tube imaging device according to the present embodiment includes a flat mirror 8 as in Embodiment 5. However, in FIG. 8B, the camera 5 and the flat mirror 8 are not illustrated in order to express the folding-back of the light R3 by the reflective surface 93.

In the present embodiment, as illustrated in FIGS. 8A and 8B, a reflective surface 93 that is located on the side opposite to the sample tube 3 imaged by the camera 5 with respect to the optical axis O of the light source 6 and located outside, in the right-left direction, a space surrounded by a polygonal line group Fl' joining points on the side surface of the cylindrical portion of the sample tube 3 on the positive side in the X-axis direction and the principal point of the camera 5 via the flat mirror 8 and a polygonal line group Fr' joining points on the side surface of the cylindrical portion of the sample tube 3 on the negative side in the X-axis direction and the principal point of the camera 5 via the flat mirror 8 is exemplified as an example of the reflective surface 9. Note that, in FIG. 8A, in order to facilitate understanding of the straight line groups Fl' and Fr', among polygonal line groups joining points on the side surface of the cylindrical portion of the sample tube 3 and the principal point P of the camera via the flat mirror 8, a polygonal line in contact with the sample tube 3 on the positive side in the X-axis direction is described as the polygonal line group Fl', and a polygonal line in contact with the sample tube 3 on the negative side in the X-axis direction is described as the polygonal line group Fr'. It is assumed that the same applies to the other drawings.

The reflective surface 93 is similar to the reflective surface 93 of Embodiment 3 except that the reflective surface is located outside, in the right-left direction, the space surrounded by the polygonal line groups Fl' and Fr' illustrated in FIG. 8A instead of the space surrounded by the straight line groups Fl and Fr illustrated in FIG. 4A. Therefore, the effect is similar to that of Embodiment 3.

### Embodiment 8

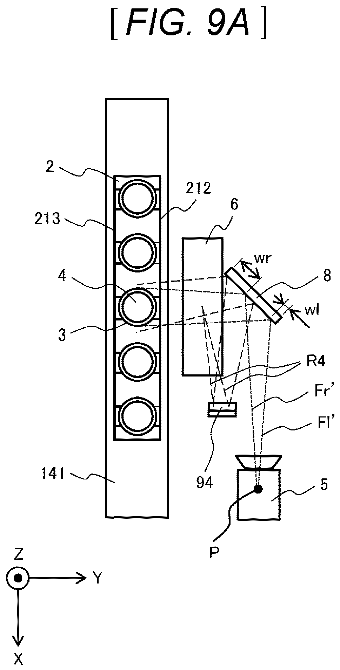

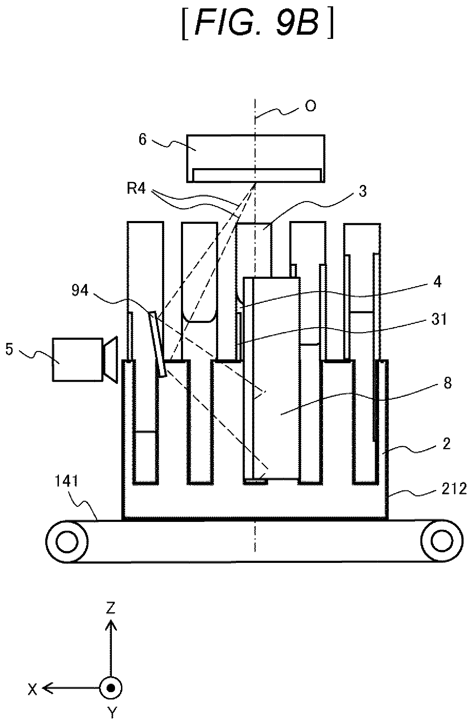

FIG. 9A is a top view illustrating an outline of a configuration of a sample tube imaging device according to Embodiment 8. FIG. 9B is a side view illustrating the outline of the configuration of the sample tube imaging device according to Embodiment 8. Note that FIG. 9B is a view as viewed from the Y-axis positive direction. The sample tube imaging device according to the present embodiment includes a flat mirror 8 as in Embodiment 5.

In the present embodiment, as illustrated in FIG. 9A, similarly to the reflective surface 93 of Embodiment 7, a reflective surface 94 located outside, in the right-left direction, a space surrounded by the polygonal line groups Fl' and Fr' is exemplified as an example of the reflective surface 9. As illustrated in FIGS. 9A and 9B, the reflective surface 94 folds back light R4 emitted by the light source 6 in the direction away from the sample tube 3, that is, the light R4 emitted to the side opposite to the sample tube 3 with respect to the optical axis O, in the light emitted from the light source 6, and injects the light to the lower portion of the sample tube 3 from the obliquely upward direction of the front surface of the sample tube 3 via the flat mirror 8. That is, the sample tube 3 is illuminated by the light R4 emitted from the light source 6 in the direction away from the sample tube 3 with respect to the optical axis O thereof, in addition to light emitted from the light source 6 in the direction of the sample tube 3. Thus, it is possible to image the sample tube 3 and the sample 4 inside the sample tube 3 while ensuring sufficient illuminance even in the lower portion of the sample tube 3 far from the light source 6.

Further, as illustrated in FIG. 9A, the flat mirror 8 may be installed such that a width wr from an intersection line between the polygonal line group Fr' and the flat mirror 8 to an end side of the flat mirror 8 on the sample tube 3 side is wider than a width wl from an intersection line between the polygonal line group Fl' and the flat mirror 8 to an end side of the flat mirror 8 opposite to the sample tube 3. As a result, this is advantageous for injecting more light R4 emitted in the direction away from the sample tube 3 with respect to the optical axis O to the lower portion of the sample tube 3.

### Embodiment 9

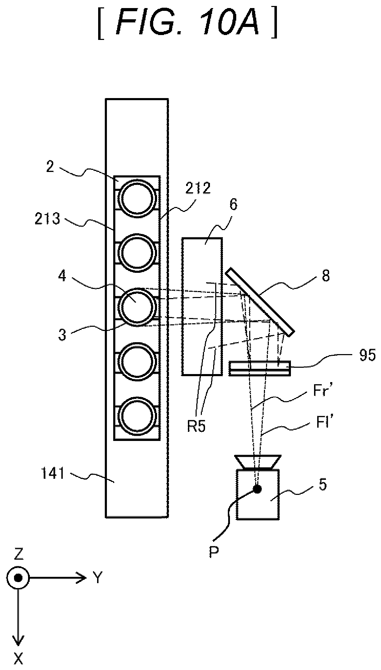

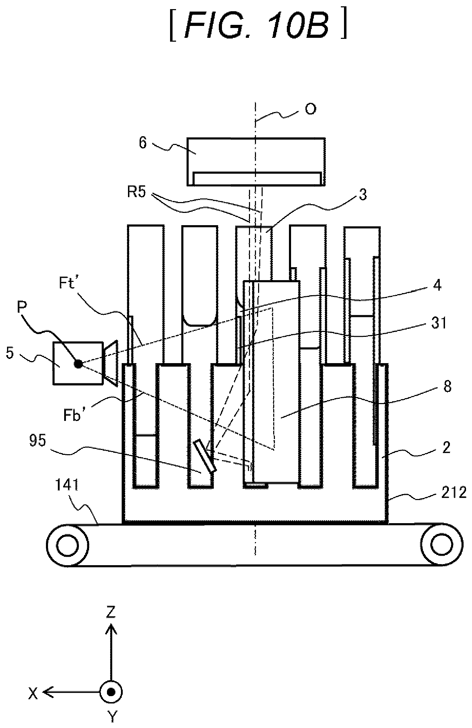

FIG. 10A is a top view illustrating an outline of a configuration of a sample tube imaging device according to Embodiment 9. FIG. 10B is a front view illustrating the outline of the configuration of the sample tube imaging device according to Embodiment 9. Note that FIG. 10B is a view as viewed from the Y-axis positive direction. The sample tube imaging device according to the present embodiment includes a flat mirror 8 as in Embodiment 5.

In the present embodiment, as illustrated in FIG. 10B, a reflective surface 95 located below the polygonal line group Fb' is exemplified as an example of the reflective surface 9. In addition, as illustrated in FIGS. 10A and 10B, the reflective surface 95 folds back again light R5 that has been emitted by the light source 6 in the direction away from the sample tube 3 and folded back to the camera 5 side by the flat mirror 8 in light emitted from the light source 6, that is, the light R5 that has been emitted to the side opposite to the sample tube 3 with respect to the optical axis O and folded back to the camera 5 side by the flat mirror 8 to the flat mirror 8 side, and injects the light R5 to the lower portion of the sample tube 3 from the obliquely upper direction of the front surface of the sample tube 3 via the flat mirror 8. That is, the lower portion of the sample tube 3 is illuminated by the light R5 emitted from the light source 6 in the direction away from the sample tube 3 with respect to the optical axis O thereof, in addition to light emitted from the light source 6 in the direction of the sample tube 3. Thus, it is possible to image the sample tube 3 and the sample 4 inside the sample tube 3 while ensuring sufficient illuminance even in the lower portion of the sample tube 3 far from the light source 6.

### Embodiment 10

The sample tube imaging device can include all of the reflective surface 91 of Embodiment 5, the reflective surface 92 of Embodiment 6, the reflective surface 93 of Embodiment 7, the reflective surface 94 of Embodiment 8, and the reflective surface 95 of Embodiment 9.

Since none of the reflective surfaces 91, 92, 93, 94, and 95 blocks the light R1, R2, R3, R4, and R5 and does not hinder reflection on each of the reflective surfaces 91, 92, 93, 94, and 95, the reflective surfaces 91, 92, 93, 94, and 95 can be used in combination. In this case, since the lights R1, R2, R3, R4, and R5 can be folded back and injected to the lower portion of the sample tube 3, it is possible to image the sample tube 3 and the sample 4 inside the sample tube 3 while further improving illuminance of a portion of the sample tube 3 far from the light source 6. In addition, the present invention is not limited to the case where all of the reflective surfaces 91, 92, 93, 94, and 95 are provided, and any two or more of the reflective surfaces 91, 92, 93, 94, and 95 may be provided.

The present invention is not limited to the above embodiments, and various modifications can be made.

For example, the above-described embodiments have been described in detail in order to describe the present invention in an easy-to-understand manner, and the present invention is not necessarily limited to an aspect including all the described configurations. Further, a part of the configuration of one embodiment can be replaced with the configuration of another embodiment. In addition, the configuration of another embodiment can be added to the configuration of one embodiment. In addition, a part of the configuration of each embodiment can be deleted, or another configuration can be added or replaced.

### Reference Signs List

1 automatic analyzer
2 sample rack
3 sample tube
4 sample
5 camera
6 light source
7 focal position
8 flat mirror
9, 91, 92, 93, 94, 95 reflective surface
10 controller
12 sample supply unit
13 analysis module
14 conveyance unit
31 barcode label
3B busbar closest to camera side of cylindrical portion of sample tube
123 carry-in port
124 carry-out port
125 barcode reader
126 barcode reading position
141 carry-in rack conveyor
142 carry-out rack conveyor
212 front surface of sample rack
213 back surface of sample rack
D transfer direction of sample rack
Ft straight line group joining points on upper end of cylindrical portion of sample tube and principal point of camera
Fb straight line group joining points on lower end of cylindrical portion of sample tube and principal point of camera
Fl straight line group joining points on side surface of cylindrical portion of sample tube on positive side in X-axis direction and principal point of camera
Fr straight line group joining points on side surface of cylindrical portion of sample tube on negative side in X-axis direction and principal point of camera
Ft' polygonal line group joining points on upper end of cylindrical portion of sample tube and principal point of camera via flat mirror
Fb' polygonal line group joining points on lower end of cylindrical portion of sample tube and principal point of camera via flat mirror
Fl' polygonal line group joining points on side surface of the cylindrical portion of the sample tube on positive side in X-axis direction and principal point of camera via flat mirror
Fr' polygonal line group joining points on side surface of the cylindrical portion of the sample tube on negative side in X-axis direction and principal point of camera via flat mirror
L light emission point of light source
L' point obtained by folding back light emission point of light source with respect to busbar closest to camera side of cylindrical portion of sample tube
O optical axis of light source
P principal point of camera
R1, R2, R3, R4, R5 light emitted by light source in direction away from sample tube
wl width from intersection line between polygonal line group Fl' and flat mirror to end side of flat mirror on side opposite to sample tube
wr width from intersection line between polygonal line group Fr' and flat mirror to end side of flat mirror on sample tube side
X axis parallel to transfer direction of sample rack
Z axis parallel to height direction of sample tube
Y axis perpendicular to both Z-axis and X-axis

## Claims

1. A sample tube imaging device comprising:
a rack conveyor that transfers a sample rack storing a sample tube in which a sample is put;
a camera that is provided on a side of the rack conveyor and captures an image of the sample tube on the rack conveyor;
a light source that is provided on a side of the rack conveyor on the same side as the camera and illuminates the sample tube captured by the camera from above; and
a reflective surface that is located on a side opposite to the sample tube imaged by the camera with respect to an optical axis of the light source and outside a space surrounded by an optical path joining points on an outer shape of a cylindrical portion of the sample tube imaged by the camera and a principal point of the camera,
wherein the reflective surface folds back light emitted from the light source in a direction away from the sample tube and injects the light to a lower portion of the sample tube from an obliquely upward direction.

2. The sample tube imaging device according to claim 1, wherein the reflective surface is located above a straight line group joining points on an upper end of the cylindrical portion of the sample tube imaged by the camera and the principal point of the camera.

3. The sample tube imaging device according to claim 1, wherein the reflective surface is located below a straight line group joining points on a lower end of the cylindrical portion of the sample tube imaged by the camera and the principal point of the camera.

4. The sample tube imaging device according to claim 1, wherein, when a direction in which the rack conveyor transfers the sample rack is set as a right-left direction,
the reflective surface is located outside, in the right-left direction, a space surrounded by a straight line group joining points on a side surface of a cylindrical portion of the sample tube imaged by the camera and the principal point of the camera.

5. The sample tube imaging device according to claim 1, wherein, when a direction in which the rack conveyor transfers the sample rack is set as a right-left direction,
the reflective surface includes a first reflective surface, a second reflective surface, and a third reflective surface,
the first reflective surface is located above a straight line group joining points on an upper end of a cylindrical portion of the sample tube imaged by the camera and the principal point of the camera,
the second reflective surface is located below a straight line group joining points on a lower end of the cylindrical portion of the sample tube imaged by the camera and the principal point of the camera, and
the third reflective surface is located outside, in the right-left direction, a space surrounded by a straight line group joining points on a side surface of the cylindrical portion of the sample tube imaged by the camera and the principal point of the camera.

6. The sample tube imaging device according to claim 1, further comprising a flat mirror that is provided on a side of the rack conveyor on the same side as the camera and reflects the sample tube on the rack conveyor,
wherein the camera images the sample tube reflected on the flat mirror.

7. The sample tube imaging device according to claim 6, wherein the reflective surface is located above a polygonal line group joining points on an upper end of a cylindrical portion of the sample tube imaged by the camera and the principal point of the camera via the flat mirror.

8. The sample tube imaging device according to claim 6, wherein the reflective surface is located below a polygonal line group joining points on a lower end of a cylindrical portion of the sample tube imaged by the camera and the principal point of the camera via the flat mirror.

9. The sample tube imaging device according to claim 6, wherein, when a direction in which the rack conveyor transfers the sample rack is set as a right-left direction,
the reflective surface is located outside, in the right-left direction, a space surrounded by a polygonal line group joining points on a side surface of a cylindrical portion of the sample tube imaged by the camera and the principal point of the camera via the flat mirror.

10. The sample tube imaging device according to claim 6, wherein, when a direction in which the rack conveyor transfers the sample rack is set as a right-left direction,
the reflective surface is located outside, in the right-left direction, a space surrounded by a polygonal line group joining points on a side surface of a cylindrical portion of the sample tube imaged by the camera and the principal point of the camera via the flat mirror, folds back light emitted by the light source in a direction away from the sample tube, and injects the light to the sample tube via the flat mirror from an obliquely upward direction.

11. The sample tube imaging device according to claim 8, wherein the reflective surface is located between the camera and the flat mirror, folds back light emitted by the light source in a direction away from the sample tube, and injects the light to the sample tube from an obliquely upward direction via the flat mirror.

12. The sample tube imaging device according to claim 6, wherein, when a direction in which the rack conveyor transfers the sample rack is set as a right-left direction,
the reflective surface includes at least two or more of a first reflective surface, a second reflective surface, a third reflective surface, a fourth reflective surface, and a fifth reflective surface,
the first reflective surface is located above a polygonal line group joining points on an upper end of a cylindrical portion of the sample tube imaged by the camera and the principal point of the camera via the flat mirror,
the second reflective surface is located below a polygonal line group joining points on a lower end of the cylindrical portion of the sample tube imaged by the camera and the principal point of the camera via the flat mirror,
the third reflective surface is located outside, in the right-left direction, a space surrounded by a polygonal line group joining points on a side surface of the cylindrical portion of the sample tube imaged by the camera and the principal point of the camera via the flat mirror,
the fourth reflective surface is located outside, in the right-left direction, the space surrounded by the polygonal line group joining points on the side surface of the cylindrical portion of the sample tube imaged by the camera and the principal point of the camera via the flat mirror, folds back light emitted by the light source in a direction away from the sample tube, and injects the light to the sample tube via the flat mirror from an obliquely upward direction, and
the fifth reflective surface is located between the camera and the flat mirror and located below the polygonal line group joining points on the lower end of the cylindrical portion of the sample tube imaged by the camera and the principal point of the camera via the flat mirror, folds back the light emitted by the light source in a direction away from the sample tube, and injects the light to the sample tube via the flat mirror from the obliquely upward direction.

13. A sample processing unit comprising the sample tube imaging device according to claim 1.

14. A sample processing unit comprising the sample tube imaging device according to claim 6.
